# EUROPEAN PATENT APPLICATION

(11) **EP 2 141 626 A1**
(43) Date of publication of application: **06.01.2010**
(21) Application number: 08012094.2
(22) Date of filing: 04.07.2008
(51) Int. Cl.: G06F 21/00

(54) **Malware detection uses time-based CPU utilization metric**

(71) Applicant: Koninklijke KPN N.V., 2516 CK The Hague (NL)
(72) Inventor: Van Steenbergen, Ate Sander, 9737 NN Groningen (NL); Keijzer, Herman, 9727 DN Groningen (NL)
(74) Representative: Wuyts, Koenraad Maria

(57) **Abstract**

A data processing system has a CPU for executing the machine code of one or more software applications. The system stores in a memory a profile in terms of, e.g., a typical number of processor cycles for the execution of the code per unit of time or another time-based metric representative of CPU utilization. The system comprises a CPU manager. The CPU manager determines whether a currently existing consumption of processor cycles, being spent on executing the code, is consistent, according to a predetermined criterion, with the profile. If the current consumption is not consistent with the profile, the CPU manager terminates the execution of the code.

## Description

### FIELD OF THE INVENTION

The invention relates to a data processing system comprising means for protection against malware; to a method of protecting a data processing system against malware, and to control software.

### BACKGROUND ART

In the field of information technology, the term "malware" refers to software configured for running largely undetected on a data processing system to thereby cause deliberately harm to the system or to the user. The term stems from the combination of the expressions "malicious" and "software". Examples of malware include viruses, trojan horses, worms, rootkits and spyware, all of which are well known to the skilled person.

Anti-virus software (AVS) has been developed to protect data processing systems against such malware. AVS identifies and eliminates malware. One way of implementing this is to scan electronic files in order to look for a pre-determined pattern ("fingerprint") typical of known viruses and other known malware. Another way is to analyze software exhibiting suspicious behavior that might indicate the presence of malware. An example of this analysis, also referred to as "heuristic analysis" in this field, includes, e.g., running the suspicious program in an isolated environment ("virtual machine") and analyzing the instructions when they are being executed. Another example of heuristic analysis includes decompiling the suspicious program and analyzing the source code.

Apart from being harmful or annoying, malware typically reduces performance of the data processing system executing its code.

### SUMMARY OF THE INVENTION

The inventors now propose to consider the performance of the data processing system as the primary quantity to control protection against malware. The inventors propose comparing actual CPU utilization with a profile of expected CPU utilization for a specif software application. The profile is representative of, e.g., a typical usage of the system determined over the past, or of an expected usage determined in advance. The typical usage is formed on the basis of, e.g., an average, maximum, or otherwise typical, number of processor cycles (or: CPU cycles) per session or per unit of time spent on executing the code of the software application in operational use of the system. The expected usage is determined by, e.g., the software provider or the system provider on the basis of, e.g., market research, experience, laboratory tests, or performance tests by the vendor, etc. The system detects an anomaly when an actual CPU utilization pattern deviates from the profiled usage. A pre-determined criterion can be applied to better distinguish an anomaly from normal statistical fluctuations. If the detected pattern of actual usage is unexpected as compared to the context of the usage profile, the system can take action accordingly. For example, the system can put the current software application on hold or into quarantine and notify the user of a possible discrepancy. The user can then check the system or have the system checked by an expert; run an anti-virus program; delete the possibly infected software application and reload the software application from his/her backup files or from another trusted source; prevent certain data files and or instruction files from being accessed by the system without explicit user permission in the form of, e.g., a password, etc. On the other hand, the anomaly need not imply that something is wrong. The discrepancy between actual and expected CPU utilization can also be a trigger to dynamically update the profile.

More specifically, the inventors propose a data processing system, e.g., a system with distributed functionalities such as a client-server network configuration, or a desktop PC, a laptop PC, a mobile telephone, a smart-phone, a PDA, or another electronic, network-enabled device, that comprises a data processor (or: CPU) for executing a code of a software application. The system further comprises a memory for storing a pre-determined profile representative of an expected processor utilization, associated with execution of the code and based on, e.g., an expected number of processor cycles used for the execution of the code per unit of time (e.g., per second, per session, per another suitable time-window), or based on another time-based metric such as time-derivatives of the expected numbers. More examples of time-based metrics are mentioned below. The system further has a processor manager that is operative to control the executing in dependence on the profile.

In an embodiment the processor manager is configured to prevent the executing of the code if the pre-determined profile is absent from the memory. A piece of autonomously presented malware is thus barred from being executed if it has no profile stored in the memory.

In a further embodiment, the system comprises a cycle counter for monitoring actual processor utilization in terms of an actual number of processor cycles consumed per software application per unit of time. The processor manager is operative to control the executing in dependence on determining whether or not the actual processor utilization is compatible with the profile. Assume that a software application is contaminated by an embedded piece of malware. Further assume that the non-contaminated (or: clean) version of this software application has a profile stored in the memory. Then, execution of the contaminated code will eventually give rise to an actual CPU utilization with a time-based metric that deviates from the expected CPU utilization. If the deviation is too large, by a suitable pre-determined criterion, the processor manager controls the CPU so as to prevent the code being further executed. Alternatively, the processor manager updates the profile based on the deviation measured.

Accordingly, software applications (i.e., executables) are executed by the CPU as processes. The actual number of CPU cycles consumed by a specific software application per unit of time is measured. On the basis of the actual number(s), and/or another time-based metric derived therefrom, a comparison can be made with a pre-determined profile. If the profile is absent, or has been set to zero as a default, further execution of the code may be halted. The processor manager optionally instructs the data processing system to notify the user of this discrepancy, e.g., via a pop-up window on the system's display monitor, and to ask explicit permission from the user to continue executing the code. If the profile is present, the actual time-based metric and the expected time-based metric, as available from the profile, can be compared. If the result is beyond what is acceptable in accordance with a predetermined criterion, the processor manager may instruct the CPU to stop execution of the code and the processor manager may instruct the thread scheduler to terminate the threads that are associated with the application just halted. The processor manager optionally instructs the data processing system to notify the user of this discrepancy, e.g., via a pop-up window on the system's display monitor, and to ask explicit permission from the user to continue executing the code.

The invention is based on the following insights. Typically, a data processor includes a cycle counter. The cycle counter is, e.g., a 64-bit counter that runs at the speed of the processor and counts CPU cycles or another time-based metric indicative of the processor's performance with respect to executing the code. Preferably, the cycle counter is implemented in hardware so as to use as few resources as possible, and so as to be as granular as possible. Such counter is also referred to as a "hardware performance counter". In this description, the expressions "CPU cycles" or "processor cycles" are used interchangeably and intend to cover any time-based quantity indicative of the CPU's performance and suitable for implementing the invention. In the invention, this time-based performance metric is monitored in operational use of the system and compared with a pre-determined profile.

In operating systems such as, e.g., Windows Vista of Microsoft, the thread scheduler uses the cycle counter register of the processor to track precisely how many CPU cycles a thread executes. Accordingly, it is known in the art to track the number of CPU cycles that are being spent by the CPU on executing a specific thread.

In order to be effective, the malware needs CPU cycles to have its own code executed. These extra CPU cycles needed by the malware may well be beyond any expected number of CPU cycles, given a pre-determined utilization profile of the system, e.g., the typical number of CPU cycles per software application per unit of time. If the discrepancy is large enough, according to a certain criterion, between the actual CPU cycles being spent per unit of time and the expected number of CPU cycles according to the profile, the system can be triggered to take action. For example, the thread scheduler of the system is normally operative to schedule resources of the system to the one or more software applications. The scheduling in the system of the invention is now put under control of the processor manager.

The invention uses a profile of a software application. The profile is based on a time-based metric of the CPU utilization of the software application, monitored when its code is being executed. The profile is preferably created when the system's integrity has not been compromised yet with malware. For example, the user has obtained software programs only from a secure source, e.g., as installed on his/her new PC or new handheld computing device or new mobile telephone, or received from a trusted party, etc. For a while, the user does not download files from uncertain sources or does not even go on-line with the system. The system is then assumed to be operating in a quarantine mode, wherein it is reasonable to expect that the system is not being exposed to malware entering the system. The profiling takes place in the quarantine mode. The profiling includes monitoring the CPU cycles spent per application per unit of time in operational use of the system, and determining a fingerprint of the CPU utilization in the form of a time-based metric. The fingerprint includes, e.g., an average, and/or maximum number of CPU cycles per one or more software applications per unit of time per session, and/or their time-derivatives thereof, etc. In addition, the number of CPU cycles spent over a longer period of time can be represented as a (discrete) function of time, giving per monitored interval a certain number of CPU cycles. One can analyze this function and decompose the function so as to represent it as a weighted sum of basic functions, e.g., as a Taylor series, a Fourier series, a wavelet series, etc.). The weighting factors of the more significant components could be used to characterize CPU utilization. As is clear with all these examples, the profile can be multidimensional, providing the average, typical, and maximum numbers, etc., a fingerprint of the time-derivative, the more significant weighting factors of the basic function in the decomposition of the CPU cycle function and/or of its time derivative(s), and/or any other temporal characteristic etc., and/or any combination and/or another relationship thereof.

A standard utilization profile for a software application can be created at the system manufacturer or at the software provider, based on, e.g., market research and taking into account demographics. For example, a system operator issues a specific profile that is to be used with a plurality of end-users of the application. These end-users are assumed to interact with the application in a more or less uniform manner as a result of these end-users having similar jobs.

The profile can also be formed in a manner illustrated by the following example. A person receives his/her new PC, and is requested to first use the PC for some time in a secure environment, e.g., without using access to the Internet, and without opening up attachments to emails, etc. During this time, the processor manager can inform the user, e.g., periodically via a pop-up window on the PC's display monitor, that the PC is working fine and/or that the processor manager has not found any discrepancy in the CPU utilization monitored. The user may then be requested whether or not the profiles, derived from the monitored CPU utilization, be installed for future use or be updated. When the user has installed a new software application, this new application can be held and processed in a quarantine mode, e.g., admitting only data traffic within an isolated piece of memory space.

Generally, software applications have their own utilization profile that is stable, but there are applications whose utilization profiles vary over time as a result of the usage that is being made of the application. For example, a virus scanner is running in the background and Microsoft Outlook checks whether or not new emails have arrived, etc. However, the profile is dependent on the usage being made of the application. For example, the virus scanner may have to scan a number of electronic files that changes vastly over time. As another example, the rate at which the user receives emails may vary greatly over time. Accordingly, the processor manager may be configured to update the profiles frequently, e.g., upon user-confirmation as mentioned above.

The profile may also depend on the actual system configuration e.g., hardware implementation and/or software implementation, of the data processing system. Some implementations are more efficient than others in terms of CPU utilization. For example, a vector processor is more efficient than a scalar processor when it comes to the processing of code in a computer graphics application. Accordingly, a modifying factor or other transformation can be used to properly scale the CPU utilization information in order to take into account the actual system configuration.

A discrepancy between the actual CPU utilization and the expected CPU utilization can be readily spotted in case the profile specifies a flat CPU utilization and the actual CPU utilization is rather peaked, and vice versa.

A feature that identifies a particular software application to the processor manager comprises, e.g., its name as appears in the window of the Windows Task Manager in a Microsoft Windows operating system or the window of the Process Explorer in Microsoft Vista.

Note that the profile can be dynamically updated during operational use of the system.

The invention also relates to a method of controlling execution of a code of a software application on a data processor in a data processing system. The method comprises accessing in a memory a pre-determined profile representative of an expected processor utilization, associated with execution of the code and based on a time-based metric. The method further comprises controlling the execution in dependence on the profile. In an embodiment, the method comprises preventing the execution of the code if the pre-determined profile is absent from the memory. In a further embodiment, the system comprises a cycle counter for monitoring actual processor utilization in terms of an actual number of processor cycles consumed per software application per unit of time; and the controlling comprises determining whether or not the actual processor utilization is compatible with the profile.

The invention also relates to control software e.g., provided on a computer readable medium or as file downloadable over a data network, for controlling execution of a code of a software application on a data processing system. The system comprises a data processor for executing the code. The control software comprises first instructions operative to access in a memory a pre-determined profile representative of an expected processor utilization associated with execution of the code and based on a time-based metric; and second instructions operative to control the executing in dependence on the profile. Preferably, the control software comprises third instructions for preventing the execution of the code if the pre-determined profile is absent from the memory. In an embodiment, the system comprises a cycle counter for monitoring actual processor utilization in terms of an actual number of processor cycles consumed per software application per unit of time; and the control software comprises fourth instructions for determining whether or not the actual processor utilization is compatible with the profile.

New malware emerges in a data network, such as the Internet, at increasingly higher rates. It is therefore impossible to inventory all malware and to timely create suitable updates to AVS. Note that the invention intercepts new malware without prior knowledge about the malware. If the new malware does not have a profile available in the system, the invention intercepts the new malware when it presents itself as an autonomous process to be executed. If the new malware is embedded in a profiled software application, and if the CPU utilization of the software application noticeably deviates from the application's profile as a result of the presence of the embedded malware, the invention also intercepts this malware.

The invention further relates to a method of monitoring execution of a code of a software application on a data processor in a data processing system. The method comprises receiving, from the data processing system and via a data network, information representative of an actual processor utilization as a result of the execution of the code. The method further comprises determining whether or not the actual processor utilization is compatible with a pre-determined profile representative of an expected processor utilization associated with execution of the code and based on a time-based metric; and using a result of the determining to further determine whether the software application is contaminated with malware. Accordingly, this implementation of the invention provides a service to individual users of software applications. The service gathers from the users specific information about CPU utilization regarding the software application and the system hardware configuration. This enables to create a profile by way of benchmark. The service uses this profile for, e.g., diagnostic purposes such as for identifying an instance of the software application contaminated with malware. The service can also be used to gather data that enables to create a fingerprint of new malware.

Features of different claims can be combined for other embodiments of the invention or taken individually to represent a further embodiment of the invention. For example, embodiments of a system, a method or control software according to the invention is characterized by features implementing a processor manager that merely checks if a software application, loaded onto the data processing system, has a pre-determined profile associated with it and that, if there is no such a profile, prevents the code of the application from being executed.

### BRIEF DESCRIPTION OF THE DRAWING

The invention is explained in further detail, by way of example and with reference to the accompanying drawing, wherein:
Fig.1 is a block diagram of a data processing system;
Fig.2 is a diagram illustrating aspects of the operating system;
Fig.3 is a flow diagram illustrating processes in the invention; and
Figs. 4-6 are block diagrams illustrating various embodiments of the invention.

Throughout the Figures, similar or corresponding features are indicated by same reference numerals.

### DETAILED EMBODIMENTS

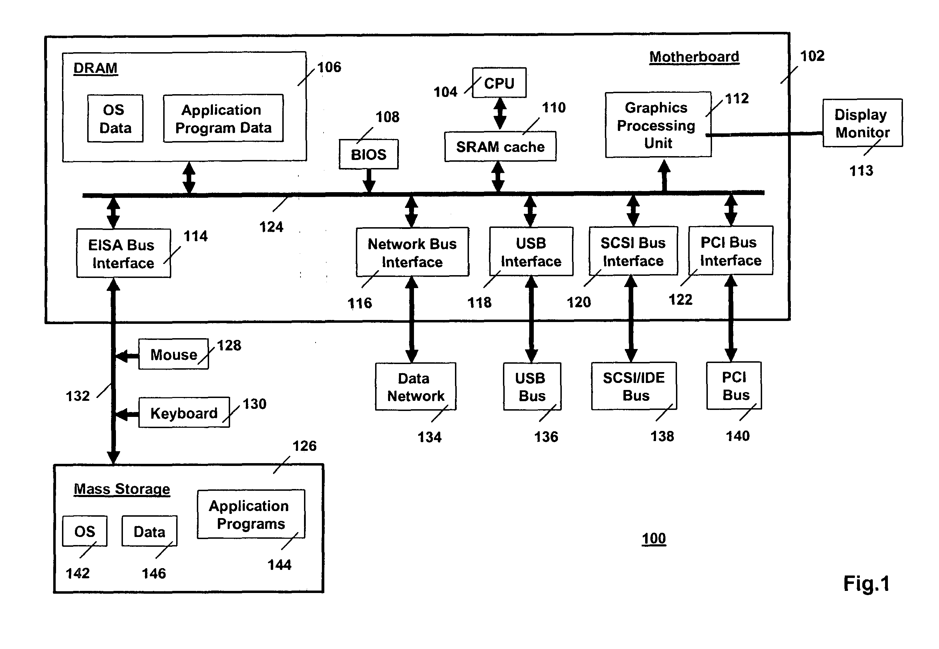

Fig. 1 is a block diagram of a data processing system, for example a typical personal computer (PC) 100. PC 100 comprises a motherboard 102 that accommodates a central processing unit (CPU) 104, main memory 106 (typically a volatile memory such as DRAM), a Basic Input/Output System (BIOS) 108 implemented in a non-volatile memory for booting PC 100, a fast SRAM cache 110 that is directly accessible to CPU 104, a graphics processing unit 112, and a variety of bus interfaces 114, 116, 118, 120 and 122, all coupled through a local bus 124. Graphics processing unit 112 serves to offload the compute-intensive graphics processing from CPU 104, as a result of which CPU 104 has more resources available for primary tasks. Unit 112 is connected to a display monitor 113. Interfaces 114-122 serve to couple a variety of peripheral equipment to motherboard 102. Interface 114 couples a mass storage 126, e.g., a hard drive, a mouse 128 and a keyboard 130 to local bus 124 via an Extended Industry Standard Architecture (EISA) bus 132. Interface 116 serves to couple local bus 124 to a data network 134, e.g., a LAN or WAN. Interface 118 serves to couple local bus 124 to a US B bus 136 for data communication with, e.g., a memory stick (not shown). Interface 120 serves to couple local bus 24 to an SCSI/IDE bus 138 for data communication with, e.g., an additional hard drive (not shown), a scanner (not shown), or a CD-ROM drive (not shown). The acronym "SCSI" stands for "Small Computer System Interface" and refers to a standard to physically connect a computer to peripheral devices for data communication. The acronym "IDE" stands for "Integrated Drive Electronics" and refers to a standard interface for connecting storage devices to a computer. Interface 122 serves to connect local bus 124 to a (peripheral Component Interconnect (PCI) bus that serves to connect local bus 124 with peripherals in the form of an integrated circuit or an expansion card (e.g., sound cards, TV tuner cards, network cards). Mass storage 126 typically stores the operating system (OS) 142 of PC 100, application programs 144 and data 146 for use with OS 142 and application programs 144. When PC 100 is operating, main memory 106 stores the data and instructions for OS 142 and applications 144.

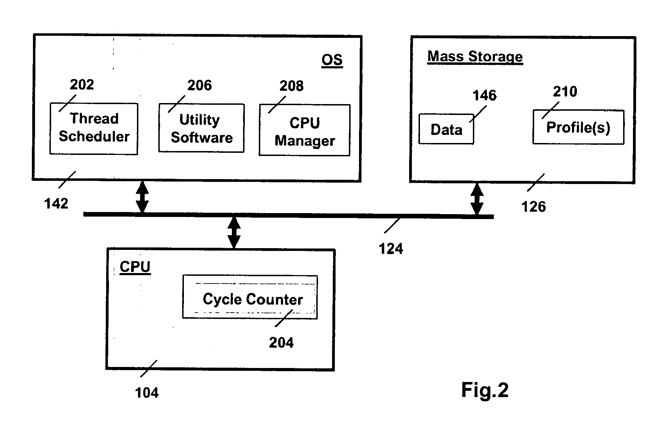

Fig.2 is a block diagram illustrating the cooperation between CPU 104 and part of OS 142 in an embodiment of the invention. OS 142 comprises a thread scheduler 202. Scheduler 202 determines which threads or processes are given access to system resources such as processing time on CPU 104, and thus controls the current workload of CPU 104. CPU 104 comprises a cycle counter 204. Cycle counter 204 is operative to track the number of CPU cycles spent on a specific thread.

Typically, data processors currently commercially available include a cycle counter. For example, a cycle counter is present on the processor chip itself. The cycle counter is, e.g., a 64-bit counter that runs at the speed of the processor. For example, in a 200 MHz processor, the cycle counter counts 200 million cycles, also referred to as ticks, per second. Preferably, the cycle counter is implemented in hardware so as to use as few resources as possible, and so as to be as granular as possible.

The article "Inside the Windows Vista Kernel: Part 1", TechNet Magazine, February 2007, discusses some aspects of Windows Vista, a series of operating systems developed by Microsoft. In Windows Vista, the scheduler uses the cycle counter register of modem processors to track precisely how many CPU cycles a thread executes. By estimating how many cycles the CPU can execute in a clock interval, it can more accurately dole out turns on the CPU. In addition, the Windows Vista scheduler does not count interrupt execution against a thread's turn. This means that on Windows Vista a thread will always get at least its turn on the CPU and never more than an extra clock interval of execution, resulting in greater fairness and more deterministic application behavior.

Accordingly, it is known in the art how to use cycle counter 204 in order to track the number of CPU cycles that is being spent by CPU 104 on executing a specific thread.

OS 142 comprises utility software 206. Utility software is also known in the art as service programs, service routines, tools, or utility routines. A utility is a type of computer software specifically designed to help manage and tune the computer hardware, operating system or application software. A utility performs typically a single task or a small range of tasks. Utility software is typically integrated into most major operating systems.

An example of utility software is Process Explorer, a freeware computer program for Microsoft Windows. Process Explorer is a system monitoring and examination utility. Process Explorer provides features that enable its user to track down problems. For example, it provides a means to list or search for named resources that are held by a process or all processes. This can be used to track down what is holding a file open and preventing its use by another program. As another example, it can show the command lines used to start a program, allowing otherwise identical processes to be distinguished. As another example, Process Explorer can show which thread (with the callstack) is using the CPU information. The TechNet Magazine article referred to above discloses a screenshot with a viewing window in the Process Explorer utility listing CPU cycles per thread as counted by counter 204 between two updates of the Process Explorer. Accordingly, it is known in the art to generate the information about the number of CPU cycles spent on a thread per time interval, and to make this information accessible to the system and to the user of the utility.

In an embodiment of the invention, OS 142 also comprises a CPU manager (or: processor manager) 208. Manager 208 may also be regarded as a utility, but is shown separately. Manager 208 serves to control monitoring and processing of the numbers of CPU cycles, spent over time on a specific thread. Optionally, these numbers are used by manager 208 to configure a CPU utilization profile 210 as discussed earlier with reference to the quarantine mode. Then, manager 208 stores this information as data 146 into memory 126. For example, the number of cycles, counted by counter 204 as spent on a specific thread between two consecutive updates of Process Explorer, is used to update data 146. Data 146 can then be used to derive profile 210, e.g., in a manner discussed above, and store profile(s) 210 for this application in a, preferably secure, segment of memory 126.

CPU manager 208 monitors CPU utilization. The checking is preferably two-fold. First, manager 208 checks whether or not the software application to be run does have a profile. If not, the execution is barred unless the user overrules manager 208. Second, manager 208 checks whether the utilization monitored matches profile 210 stored in memory 126. This checking is done, for example, continually or when total CPU utilization exceeds a pre-determined threshold. If the monitored utilization fits profile 210, scheduler 202 proceeds with feeding to CPU 104 threads of the program covered by profile 210. CPU 104 proceeds then with the execution of the program. CPU manager 208 may further adjust profile 210 on the basis of the number of CPU cycles being currently (current session of interaction of end user with the program) used by CPU 104 on execution of the code. For example, CPU manager 208 saves in a register (not shown) or in memory 106 or in memory 126, the number of CPU cycles, spent on this program between two consecutive updates of Process Explorer or of a similar utility. Then, this saved number, or another value representative thereof, is processed to update the existing version of profile 210. With regard to the feature "another value thereof", it is remarked here that CPU utilization can be quantified in arbitrary practical units other than individual CPU cycles. For example, the utilization is expressed in terms of 1,000 CPU cycles or 10,000 CPU cycles. Alternatively, the CPU utilization is expressed in terms of CPU time. Note that Process Explorer also provides information about the CPU time spent per thread. See the TechNet Magazine publication mentioned above.

Accordingly, the invention monitors CPU utilization per thread and optionally updates profile 210.

Assume that, at a certain moment, CPU manager 208 determines that the currently monitored CPU utilization by a software program does not match with profile 210. CPU manager 208 is configured for then preventing the further execution of the code of this program by instructing CPU 104 to halt the execution of threads associated with this program. More specifically, upon detecting a mismatch between CPU utilization and profile 210, CPU manager 208 will complete the running process and lower the priorities of the software program's threads still to be executed. The latter threads will therefore not be executed for the time being. The process can be then terminated in its entirety or the priority can be restored, depending on the eventual action taken by CPU manager 208.

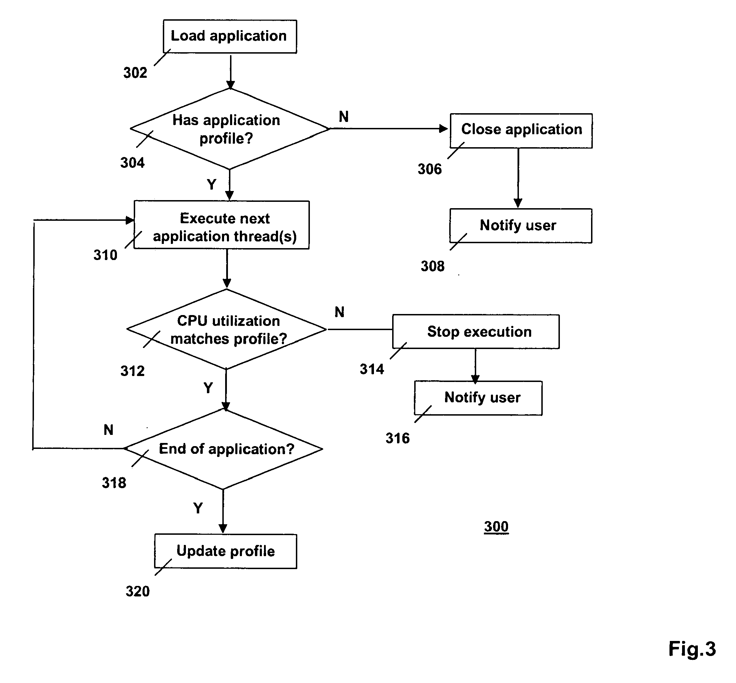

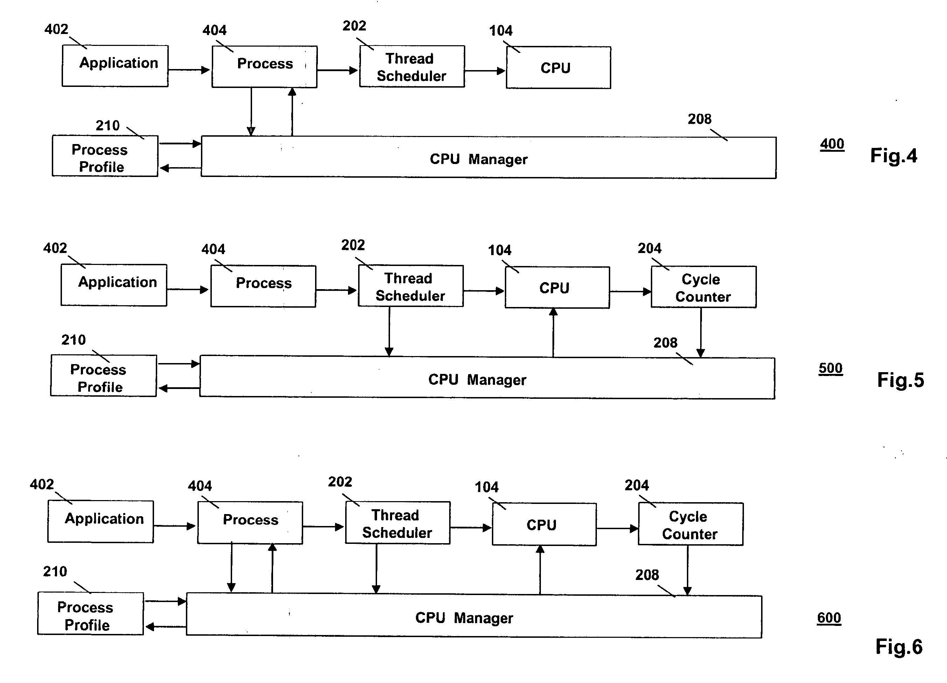

Fig.3 is a flow diagram illustrating the operation of processor manager 208. In a step 302, a new application is loaded for having its code executed by CPU 104. In a step 304, processor manager 208 checks if this new application is associated with a profile 210. If processor manager 208 cannot identify such profile, processor manager 208 prevents the processes to execute the application's code. For this purpose, the "pkill" utility can be invoked in a Unix OS, or the taskkill utility or command can be invoked in an OS of Microsoft Windows XP or Microsoft Windows Vista. These utilities operate on pthreads. The term "pthreads" stands for: "POSIX (Portable Operating System Interface) threads", which refers to a standard for API's for creating and managing threads, as is known in the art. See further below with reference to Fig.4.

Processor manager 208 then also closes this application in a step 306, and optionally, notifies the user of the problem in a step 308. This notifying can take the form of a message displayed on display monitor 113. The user may then activate a virus scanner or may then otherwise check the integrity of the software on system 100. Alternatively, or in addition, processor manager 208 causes the virus scanner to be started. If the application loaded does have a profile 210, then in a next step 310, the execution proceeds and scheduler 202 feeds the next thread(s) of the application to CPU 104. In a step 312, processor manager 208 verifies whether or not the CPU utilization of the executed thread or threads is consistent with profile 210. If it is found that the CPU utilization does not match profile 210, processor manager 208 instructs CPU 104 in a step 314 to stop execution of threads of this particular program. A proper thread management operation such as lowering the thread's priority or terminating the thread may be invoked for this purpose to purge the thread from the queue.

Optionally, processor manager 208 causes the user to be notified of this problem, e.g., via an onscreen message at monitor 113. The user may then activate the virus scanner or may then otherwise check the integrity of the software on system 100. Alternatively, or in addition, processor manager 208 causes the virus scanner to be started. If the CPU utilization does match profile 210, processor manager checks in a step 318 if the application has ended, i.e., if there are no more threads to be executed for this particular application. If the application has ended, processor manager 208 updates profile 210, if needed, based on the monitored CPU utilization associated with this particular program. If the application has not ended, processor manager 208 returns to step 310.

Fig.4 is a diagram illustrating operation in a first embodiment 400 of the invention. An application 402 is to be run as a process 404 on system 100, wherein CPU 104 is to execute the code as supplied by thread manager 202. As known, when a new process is to be added to the processes that OS 142 is already managing, OS 142 builds a data structure called a Process control block (PCB) which is used to keep track of the new process and the memory address space allocated to the new process. These actions constitute the creation of the new process, in this example process 404 associated with application 402. Before scheduler 202 supplies a thread of process 404 to CPU 104, CPU manager 208 checks if application 402 has a profile 210 associated with it. If CPU manager 208 cannot find a profile 210 associated with application 402, manager 208 stops process 404. The user may be asked to supply input about whether or not to continue the execution, e.g., via a message displayed on monitor 113 that includes that user-selectable menu options "continue" and "stop". In case the user selects the option "continue", and CPU manager cannot identify the profile of the new application, the application is added to the list of applications being managed by OS 142, execution starts and the corresponding profile is added directly or created later. If CPU manager 208 identifies profile 210 as associated with application 402, manager 208 allows execution of the code of process 404. Accordingly, in the case of a new application without a profile, the user is given the option to manually override CPU manager 208.

Fig.5 is a diagram illustrating operation in a second embodiment 500 of the invention. It is assumed that scheduler 202 supplies one or more threads of process 404 to CPU 104. Counter 204 keeps track of a time-based metric representative of CPU utilization of the threads being executed. Manager 208 checks if CPU utilization by one or more of the threads of process 404 matches profile 210 that is associated with application 402. If manager 208 detects a discrepancy between the actual CPU utilization and the expected CPU utilization on the basis of profile 210, CPU manager 208 stops the current thread and instructs scheduler 202 to remove the threads of process 404 already scheduled for execution. The user may again be notified via an on-screen message, to decide whether or not to proceed with the execution. If manager 208 does not detect a discrepancy, execution continues.

Fig.5 is a diagram illustrating operation in a third embodiment 600 of the invention. In embodiment 600, the features of embodiments 400 and 500 have been combined. That is, before starting the execution of the code of new process 404, CPU manager 208 checks whether or not application 402 has a profile 210 stored in memory 126. If application 402 does have a profile 210, execution starts. During execution, CPU manager 208 monitors CPU utilization by process 404, and compares actual CPU utilization with an expected CPU utilization as specified by profile 210.

In each of embodiments 400-600, CPU manager 208 may be configured for updating profile 210 based on the monitored actual CPU utilization

In the above text, reference has been made to a scheduler as if it were a module of control software or a routine. However, in an OS such as Microsoft Windows 2000, the scheduling code is spread throughout the kernel wherein scheduling-related events occur. The routines, which perform these duties, are collectively referred to as the kernel's dispatcher. Accordingly, the discussion of the invention above should be interpreted with respect to the functionality of conditionally barring the execution of a thread of code of a software application, whether implemented by a scheduler module or a dispatcher.

## Claims

1. A data processing system (100) comprising:
a data processor (104) for executing a code of a software application (144);
a memory (106; 126) for storing a pre-determined profile (210) representative of an expected processor utilization associated with execution of the code and based on a time-based metric;
a processor manager (208) that is operative to control the executing in dependence on the profile.

2. The system of claim 1, wherein the processor manager is configured for preventing the executing of the code if the pre-determined profile is absent from the memory.

3. The system of claim 1 or 2, wherein:
the system comprises a cycle counter (204) for monitoring actual processor utilization based on an actual number of processor cycles consumed per software application per unit of time; and
the processor manager is operative to control the executing in dependence on whether or not the actual processor utilization is compatible with the profile.

4. A method of controlling execution of a code of a software application (144) on a data processor (104) in a data processing system (100), wherein the method comprises:
accessing in a memory (106; 126) a stored pre-determined profile (210) representative of an expected processor utilization associated with execution of the code and based on a time-based metric; and
controlling the execution in dependence on the profile.

5. The method of claim 4, comprising preventing the execution of the code if the pre-determined profile is absent from the memory.

6. The method of claim 4 or 5, wherein:
the system comprises a cycle counter (204) for monitoring actual processor utilization in terms of an actual number of processor cycles consumed per software application per unit of time; and
the controlling comprises determining whether or not the actual processor utilization is compatible with the profile.

7. Control software (208) on a computer readable medium for controlling execution of a code of a software application (144) on a data processing system (100), the system comprising a data processor (104) for executing the code; wherein the control software comprises:
first instructions operative to access in a memory (106; 126) a pre-determined profile (210) representative of an expected processor utilization associated with execution of the code and based on a time-based metric; and
second instructions operative to control the execution in dependence on the profile.

8. The control software of claim 7, comprising third instructions for preventing the execution of the code if the pre-determined profile is absent from the memory.

9. The control software of claim 8, wherein:
the system comprises a cycle counter (204) for monitoring actual processor utilization in terms of an actual number of processor cycles consumed per software application per unit of time; and
the control software comprises fourth instructions for determining whether or not the actual processor utilization is compatible with the profile.

10. A method of monitoring execution of a code of a software application (144) on a data processor (104) in a data processing system (100), the method comprising:
receiving, from the data processing system and via a data network, information representative of an actual processor utilization as a result of the execution of the code;
determining whether or not the actual processor utilization is compatible with a pre-determined profile (210) representative of an expected processor utilization associated with execution of the code and based on a time-based metric; and
using a result of the determining to further determine whether the software application is contaminated with malware.
